# EUROPÄISCHE PATENTSCHRIFT

(11) **EP 3 320 605 B1**
(45) Veröffentlichungstag und Bekanntmachung des Hinweises auf die Patenterteilung: **27.02.2019**
(21) Anmeldenummer: 16736487.6
(22) Anmeldetag: 08.07.2016
(51) Int. Cl.: H02K 21/28

(54) **ELEKTROMASCHINE MIT MAGNETFLUSSSCHWÄCHUNGSVORRICHTUNG**
ELECTRICAL MACHINE COMPRISING A MAGNETIC FLUX WEAKENING APPARATUS
MACHINE ÉLECTRIQUE AVEC DISPOSITIF D'ATTÉNUATION DE FLUX MAGNÉTIQUE

(30) Priorität: 09.07.2015 DE 102015212840
(43) Veröffentlichungstag der Anmeldung: 16.05.2018
(73) Patentinhaber: Volkswagen Aktiengesellschaft, 38440 Wolfsburg (DE)
(72) Erfinder: WOEHL-BRUHN, Henning, 38162 Cremlingen (DE); PLIKAT, Robert, 29369 Ummern (DE); TIMM, Eike, Hermann, 38108 Braunschweig (DE)
(74) Vertreter: MFG Patentanwälte Meyer-Wildhagen Meggle-Freund Gerhard PartG mbB
(86) Internationale Anmeldenummer: PCT/EP2016/066371
(87) Internationale Veröffentlichungsnummer: WO 2017/005928

(56) Entgegenhaltungen:
- JP-A- H07 236 259
- JP-A- 2006 246 662
- JP-A- 2007 221 881
- US-A1- 2009 045 765

## Beschreibung

Die vorliegende Erfindung betrifft eine Elektromaschine mit einer Flussänderungsvorrichtung, um induzierte Spannungen zu begrenzen.

Beim Betrieb einer herkömmlichen drehzahlvariablen elektrischen Maschine (wie zum Beispiel Synchronmaschine) kann die zur Speisung zur Verfügung stehende Spannung durch eine Umrichterdeckenspannung begrenzt sein. Fahrzeuge mit Elektromotor verfügen zum Beispiel meist über einen Gleichspannungs-Energiespeicher und -Netze, so dass in diesem Fall eine maximale Spannung festliegt, welche an den Klemmen der Maschine angelegt werden kann. Die Umrichterdeckenspannung und der maximale Phasenstrom können die Wahl der Bauelemente des Umrichters sowie dessen Kosten bestimmen. Je nach geforderter Drehmoment-/Drehzahlcharakteristik können Grenzbereiche mit konstantem maximalem Drehmoment sowie mit konstanter maximaler Leistung vorgesehen werden. Erfolgt eine Speisung des Antriebs aus so einer Gleichspannungsquelle, so kann der zulässige maximale Gleichstrom auch die maximale Leistung definieren, die diese Gleichspannungsquelle bereitstellen kann. Ein Betrieb des Antriebs mit dieser maximalen Leistung über weite Teile des Drehzahlspektrums erscheint für eine gute Ausnutzung des Gesamtantriebssystems wünschenswert.

Bei einer Permanentmagnet-erregten Synchronmaschine verändert sich mit zunehmender Drehzahl und bei einem gleichbleibenden Erregerfluss (vereinfacht der magnetische Fluss, der vom Rotor auf die Statorwicklung wirkt) die induzierte Spannung der Maschine, das heißt die in Leitern des Stators induzierte Spannung. Wird die maximale Statorspannung erreicht, kann die Drehzahl bei gleichbleibender Leistung nur dann weiter vergrößert werden, wenn der die induzierte Spannung beeinflussende magnetische Fluss in einem Spalt zwischen Rotor und Stator entsprechend verringert wird.

Elektrische Maschinen sind keine idealen Energieumwandler. Verluste in der Wicklung bzw. einem Leiter des Stators und in den magnetischen Fluss führenden Materialien können die Hauptverlustpfade bilden. Besonders bei Anwendungen mit Batteriespeisung (Elektro- und Hybridfahrzeuge) ist eine hohe Effizienz der Elektromaschine wichtig, da nicht nur der Energieeinsatz während des Betriebs des Fahrzeugs beeinflusst wird, sondern auch die maximale Reichweite und die Systemkosten von Antrieb mit Energiespeicher (Batterie) maßgeblich durch diese Effizienz beeinflusst sind.

Bei herkömmlichen Permanentmagnet-erregten Elektromaschinen ist das sogenannte Vorkommutieren des Statorstroms ein bekanntes Verfahren, um der induzierten Spannung bei hohen Drehzahlen entgegenzuwirken.

Die Offenlegungsschrift DE 10 2010 049 178 A1 offenbart eine elektrische Maschine und ein Verfahren zur Steuerung einer magnetischen Feldstärke und/oder einer Flussdichte eines Statoranteils eines Erregerfeldes. Dabei ist ein Teilbereich des Rotors als Aussparung ausgebildet, wobei in die Aussparung ein Einschubelement bewegbar, insbesondere einschiebbar ist.

Die Offenlegungsschrift DE 10 2005 015 657 A1 offenbart eine elektrische Maschine und ein Verfahren zur Feld- und Ankerverstellung bei einer permanent erregten elektrischen Maschine, wobei ein relativ zum Stator drehbarer Läufer gegeneinander verdrehbare Läuferabschnitte aufweist, bei denen jeder Läuferabschnitt eine Anordnung von Permanentmagneten mit alternierend radial nach außen zeigenden Polaritäten trägt. Ferner ist eine Stelleinrichtung zum Verdrehen der Läuferabschnitte gegeneinander vorgesehen, wobei die Läuferabschnitte in einem variierenden Drehversatz zueinander ausrichtbar sind. Ein Läuferabschnitt kann starr mit der Hauptwelle verbunden sein, der andere Abschnitt ist gegenüber der Hauptwelle verdrehbar. Zur Verstellung der Läuferabschnitte gegeneinander ist ferner eine Stelleinrichtung vorgesehen, welche einen Aktuator aufweist. Vergleichbares zeigt auch die US 2009/0045765 A1.

Die im Stand der Technik durchgeführten Verfahren und Elektromaschinen haben verschiedene Nachteile. So erzeugt zum Beispiel das Verfahren der Feldschwächung durch Vorkommutierung zusätzliche Verluste, wenn Betriebspunkte mit dieser Art der Feldschwächung erreicht werden müssen. Folglich kann sich der mittlere Wirkungsgrad im Zyklus deutlich verschlechtern.

Herkömmlich ist versucht worden, diese Nachteile durch eine passgenaue Abstimmung von Umrichter und Elektromotor zu minimieren, was jedoch nicht in allen Umsetzungen zu befriedigenden Ergebnissen geführt hat. Durch das Design des Motors (insbesondere die Lage der Permanentmagnete im Rotor) lassen sich zum einen Bereiche von niedrigen bis mittleren Drehzahlen im Drehmoment-Drehzahl-Kennfeld anfahren, ohne eine Feldschwächung zu bewirken. Zum anderen kann eine geschickte Wahl des magnetischen Designs des permanenterregten Synchronmotors eine Feldschwächung nach obigem Prinzip mit einem verhältnismäßig geringem zusätzlichen Stromanteil ermöglichen, wenn eine Rotor-inhärente Reluktanz benutzt werden kann. Dennoch erzeugt auch ein geringfügig höherer Strom im Zyklus reproduzierbar deutlich mehr Verluste. Der Grund liegt hierfür in den überwiegend ohmschen Lasten, die im Elektroantrieb vorwiegend den Wirkungsgrad bestimmen und in deren Berechnung der Strom quadratisch einfließt.

Aus der JP2006-246662A ist eine Elektromaschine bekannt, die so ausgebildet ist, dass keine unzulässig hohe induzierte Spannung bei hoher Drehzahl erzeugt wird. Zur Beeinflussung des magnetischen Flusses ist eine Steuerscheibe vorgesehen, die stirnseitig zum Rotor verstellbar ist. Dabei sind Ausführungen angegeben, bei denen diese Steuerscheibe entweder drehfest mit dem Gehäuse oder mit dem Rotor gekoppelt ist. Ähnliche Ansätze sind auch in der JP2007-221881 A und der JP HO7-236259 A bekannt.

Weitere Vorrichtungen zur Beeinflussung des magnetischen Hauptflusses (im Spalt zwischen Rotor und Stator) sind aus der US 2007/0018524 A1 und US 2007/0241628 A1 bekannt. In der US 2007/0018524 A1 ist dazu ein drehfest zum Stator angeordnetes Kopplungsjoch vorgesehen, welches stirnseitig die Stator- und Rotorstirnflächen übergreift und axial zu diesen verstellbar ist. Aus der US 2007/0241628 A1 ist eine Vorrichtung bekannt, bei der der magnetische Hauptfluss durch die Eintauchtiefe eines Rotorzylinders in einen Statortopf veränderbar ist.

Die konventionellen Verfahren und Vorrichtungen sind unflexibel, aufwändig und kompliziert in der Herstellung und verursachen erhebliche Kosten. Insbesondere sind besondere Vorkehrungen zur Konstruktion der Rotoren erforderlich.

Eine Aufgabe der vorliegenden Erfindung ist es somit, eine Elektromaschine vorzuschlagen, welche zumindest einige der oben genannte Probleme reduziert. Insbesondere ist es eine Aufgabe der vorliegenden Erfindung, eine Elektromaschine vorzuschlagen, welche, insbesondere in einem hohen Drehzahlbereich, in zuverlässiger und sicherer Weise betrieben werden kann und welche in einfacher Weise eine Flussschwächung in einem hohen Drehzahlbereich zu bewirken ermöglicht.

Die Aufgabe wird durch die Elektromaschine gemäß dem unabhängigen Anspruch gelöst.

Gemäß einem Aspekt der vorliegenden Erfindung ist eine Elektromaschine bereitgestellt, welche aufweist:
einen zu einem Gehäuse fixierten Stator;
einen Rotor mit einer Magnetfelderzeugungseinrichtung zum Erzeugen eines magnetischen Flusses, wobei der Rotor koaxial drehbar relativ zu dem Stator angeordnet ist und wobei ein Spalt zwischen Stator und Rotor ausgebildet ist; und eine Flussänderungsvorrichtung, welche
   einen axial relativ zum Rotor verstellbaren, axial außerhalb der Magnetfelderzeugungseinrichtung angeordneten Körper aufweist, um einen magnetischen Fluss innerhalb des Spaltes in Abhängigkeit von einer Axialstellung des Körpers relativ zum Rotor zu ändern. Die Flussänderungsvorrichtung umfasst dabei eine Verstelleinrichtung zum axialen Verstellen der Axialposition des Körpers relativ zum Rotor umfassen. Dabei kann die Verstelleinrichtung einen Aktuator, der über ein Stellelement, insbesondere ein Gestänge, auf den Körper wirkt, aufweisen, wobei das Stellelement so am Körper und/oder am Aktuator angreift, insbesondere mittels eines Drehlagers, dass eine Drehbewegung des Körpers vom Stellelement, vom Gehäuse, vom Rotor und/oder vom Aktuator entkoppelbar ist.

Die Elektromaschine ist ausgebildet, ein Verfahren zur Schwächung des magnetischen Flusses während bestimmter Betriebszustände der Elektromaschine durchzuführen. Die Elektromaschine kann insbesondere eine Synchronmaschine sein.

Der Stator kann einteilig oder mehrteilig in einer Ringform ausgebildet sein und ferromagnetisches Material umfassen, etwa dünne Schichten von relativ zueinander elektrisch isolierten Statorblechen. Der Stator kann auch aus anderen Materialien hergestellt sein, wie zum Beispiel durch ein verpresstes magnetisches Pulvermaterial. Daher wird im Folgenden auch vom Statorpaket gesprochen. Um den Stator können Leiter gelegt sein, wobei mehrere Gruppen von Leitern vorgesehen sein können. Dabei kann die Anzahl von Leitern in jeder Gruppe einer Anzahl von gewünschten elektrischen Phasen entsprechen. Eine weitere Ausführung des Stators kann aus Luftspulen bestehen. In diesem Fall besteht nur der Rücken (Joch) des Stators aus einem ferromagnetischen Material oder es wird kein ferromagnetisches Material, sondern dia- oder paramagnetische Materialen oder gar ein Gas oder Luft eingesetzt.

Der Rotor kann relativ zum Stator drehbar gelagert sein und um eine axiale Richtung drehbar ausgeführt sein. Die Magnetfelderzeugungseinrichtung kann zum Beispiel einen oder mehrere Permanentmagneten und/oder einen oder mehrere Elektromagneten umfassen. Die Magnetfelderzeugungseinrichtung kann zum Beispiel mehrere Permanentmagneten aufweisen, welche in Umfangsrichtung beabstandet nebeneinander oder auch sternförmig angeordnet sind und in ihrer Nordpol-Südpol-Ausrichtung alternierend angeordnet sind. Der magnetische Fluss in dem Spalt zwischen Stator und Rotor kann im Wesentlichen in radialer Richtung gerichtet sein.

Die Flussänderungsvorrichtung kann mehrere Teile umfassen, wovon mindestens einer der Körper ist, welcher vollständig axial außerhalb der Magnetfelderzeugungseinrichtung angeordnet ist. Somit brauchen in dem Abschnitt des Rotors, welcher zur Halterung der Magnetfelderzeugungseinrichtung vorgesehen ist, keine konstruktiven Änderungen vorgenommen werden. So können herkömmliche Konstruktionen von Halterungen für Magnetfelderzeugungseinrichtungen verwendet werden. Der Rotor kann jedoch im Vergleich zu einem herkömmlichen Rotor axial verkürzt sein.

Der Körper kann insbesondere axial verschiebbar bzw. bewegbar sein und kann so einen Teil eines magnetischen Flusses in Abhängigkeit seiner Axialstellung umlenken, insbesondere durch den Körper hindurchführen, insbesondere hinein und wieder hinausführen. Damit kann der magnetische Fluss auch innerhalb des Spaltes zwischen Rotor und Stator verändert, insbesondere geschwächt werden, wenn der Körper auf eine Stirnfläche des Rotors hin bewegt wird bzw. nahe an der Stirnfläche des Rotors positioniert ist, insbesondere im Wesentlichen daran anliegt.

Das Gestänge kann zum Beispiel (zumindest in Abschnitten) durch eine Hohlwelle des Rotors hindurchgeführt werden. In anderen Ausführungsformen kann das Stellelement um einen Teil einer Rotorwelle greifen. Damit ist eine axiale Verstellung des Körpers auf einfache Weise ermöglicht.

Eine weitere Ausführungsform kann eine Verstelleinrichtung auf dem Rotor (z.B. fest mit dem Rotor verbunden, sodass sie sich mit dem Rotor synchron mitbewegt) beinhalten, die dann keine Entkopplung der Drehbewegung mehr aufweisen würde.

Der Aktuator kann einen elektrischen und/oder einen hydraulischen Aktuator umfassen.

Der Körper kann aber auch eine feste (verdrehsichere) Kopplung mit dem Gehäuse bzw. dem Stator aufweisen. Bei so einer Ausführung kann die axiale Verstellung des Körpers zu einer Schwächung des magnetischen Flusses genutzt werden. Allerdings würden durch die Differenzdrehzahl zwischen Rotor und Körper in diesem Körper Wirbelströme induziert werden, die Verluste für die Maschine bei Nutzung der Feldschwächeinrichtung bedeuten würden. Bei dem Vergleich einer Elektromaschine ohne bzw. mit dieser Art der Ausführung sind zwei Punkte von Bedeutung: Die Verlustbilanz fällt zu Gunsten der Maschine mit mechanischer Feldschwächeinrichtung aus, da durch die Aufteilung des Flusses des Rotors auf den Stator und den Körper die spezifische magnetische Belastung des Materials abnimmt und das Material des Körpers gegen das Entstehen von Wirbelströmen optimiert sein kann. Übliche Verfahren hierzu sind beispielsweise eine Segmentierung durch Bleche oder Abschnitte des Körpers sowie die Verwendung von Pulvermaterialien.

Ein weiteres Ausführungsbeispiel beinhaltet Flussänderungsvorrichtungen, deren Körper gar keine feste Kopplung zum Rotor und Stator aufweisen - der Körper also frei drehend zu Rotor und Stator (Gehäuse) gelagert ist. Die Verstelleinrichtung kann hierzu über ein Lager vom Körper entkoppelt sein. Dies bedeutet einen frei verdrehbaren Körper innerhalb der Elektromaschine, welche unterschiedliche Differenzdrehzahlen zwischen Rotor und Stator ermöglichen. Diese stellen sich durch äußere Randbedingungen ein. Je näher der Körper an den Rotor herangeführt wird, desto mehr magnetischer (Streu-)Fluss wird in diesen eindringen. Sollte eine Differenzdrehzahl abweichend von Null vorherrschen, werden sich Wirbelströme im Körper ausprägen, die diesen Körper derart beschleunigen würden, dass sich diese Differenzdrehzahl verringern wird. Abschließend wird sich eine Drehzahldifferenz einstellen, welche ein Gleichgewicht aus Verlusten einerseits (Lager- und Ventilationsverluste sowie Wirbelstromverluste) sowie der Beschleunigungsleistung durch die Kraft der Rückwirkung der Wirbelverluste auf das erzeugende Feld einstellen.

Eine weitere mögliche Ausführungsform kombiniert den frei drehenden Körper mit der Möglichkeit zur Kopplung an den Rotor. Die Feldschwächvorrichtung -also der Körper-wird in diesem Fall so dicht an den Rotor herangefahren, dass über ein reibschlüssiges Element (z.B. einen Synchronisierungsring oder einer Reibkupplung) oder ein formschlüssiges Element (z.B. einer Klauenkupplung) eine harte Kopplung der Drehzahlen von Rotor und Feldschwächvorrichtung, also dem Körper stattfindet. Diese Kopplung kann bewusst angefahren und auch wieder gelöst werden.

So eine Stellung, bei der der Körper dicht an den Rotor herangefahren wird, und in dieser Stellung dann auch mit diesem drehfest koppelbar ist, kann als Vorzugslage ausgestaltet sein, die im stromlosen Zustand oder bei einem Fehlerzustand des Systems bzw. des Antriebs eingenommen wird. In dieser Stellung erfolgt eine maximale Feldschwächung des Hauptflusses (über den verstärkten Streufluss). Dies ermöglicht eine Fail-Safe-Funktion, die im Fehlerfall von großer Bedeutung sein kann. Bei hohen Drehzahlen und einer Feldschwächung durch dem Stromfluss im Stator (Vorkommutation) wird beim Ausfall des Statorstroms eine hohe Spannung durch die Wicklung des Motors erzeugt. Dies kann zu einem unerwünschten und im schlimmsten Fall unkontrollierten Strom- und Energiefluss aus der elektrischen Maschine in ein zu speisendes Netz führen (z.B. für In-Bordnetz eines Kraftfahrzeugs). Dies kann zu Betriebsschäden oder sogar zur Personengefährdung führen solange der Motor mit hohen Drehzahlen läuft. Durch die oben angegebene Vorzugsposition (mechanische und magnetische Kopplung des Körpers mit dem Rotor) wird die induzierte Spannung schlagartig durch die Vergrößerung des Streuflusses und die damit verbundene Verringerung des Hauptflusses reduziert und mögliche Gefährdung damit vermieden. Die Vorzugsposition (Fail-Safe-Zustand) kann mit einem Aktor eingestellt werden, der aus einem netz- bzw. stromunabhängigen Energiespeicher gespeist wird, z.B. eine mechanische Feder, eine Fluidfeder oder ähnliches.

Eine gegenteilige Ansteuerung ist ebenfalls möglich, nämlich in der Weise, dass in einem bestimmten extremen Betriebszustand (beispielsweise bei Versagen der primären Stromversorgung) eine Notspeisung eines elektrischen Energienetzes ermöglicht wird. In so einem Fall ist es auch denkbar, den Körper möglichst weit weg vom Rotor zu verstellen und ggf. in Drehrichtung festzusetzen. In so einem Fall kann die elektrische Maschine als Generator verwendet werden, ohne dass die induzierten Ströme und Spannungen durch die Flussänderungsvorrichtung herabgesetzt werden.

So steht eine einfache Konstruktion mit einem einfachen Mechanismus zur Verfügung, um eine Magnetflussschwächung innerhalb des Spaltes zu bewirken. Insbesondere bei solchen Drehzahlen, welche oberhalb eines Schwellwertes liegen. Damit kann die Elektromaschine bei höheren Drehzahlen als der Schwellwert zuverlässig betrieben werden, ohne dass eine Spannung oberhalb einer Grenzspannung in dem Stator (insbesondere in Leitern des Stators) induziert wird und ohne eine Beschädigung von Komponenten der Elektromaschine zu riskieren.

Der Körper kann zu einer axialen Stirnseite des Rotors hin verstellbar sein und kann insbesondere so weit axial verschoben bzw. verstellt werden, bis er im Wesentlichen an der Stirnseite des Rotors anliegt. In dieser Stellung kann eine maximale Magnetflussschwächung erreicht sein. In diesem Zustand kann ein magnetischer Kurzschluss (Einführen von Magnetflusslinien innerhalb des Körpers) zumindest eines Teils von Magnetflusskomponenten (welche insbesondere quer zu der radialen Richtung verlaufen) des Rotors aus der axialen Stirnseite des Rotors bewirkt sein. Damit kann eine Feldschwächung erreicht werden. Die Streumagnetflusskomponenten können zumindest teilweise daran gehindert sein, mit Statorkomponenten zu interagieren, um somit Streuverluste zu vermindern.

Der Körper kann einen Werkstoff mit einem niedrigeren magnetischen Widerstand als Luft aufweisen, um eine effektive Ablenkung von Magnetflusslinien zu erreichen. Bei Verstellen des Körpers zu der axialen Stirnseite des Rotors hin, kann der Werkstoff des Körpers zumindest in einem Teilbereich des Körpers in Sättigung magnetisiert werden. Damit kann der Werkstoff des Körpers (sowie auch die Geometrie sowie die Werkstoffverteilung innerhalb des Körpers) auf den individuellen Rotor, insbesondere die individuelle Verteilung des von der Magnetfelderzeugungseinrichtung erzeugten magnetischen Flusses, abgestimmt werden, um eine hohe, insbesondere maximal erreichbare sowie eine genau dosierbare, Magnetflussschwächung und/oder Streuverlustverminderung zu erreichen.

Der Körper kann eine Strukturierung (Profilierung, Oberflächentopologie, welche von einer Ebene abweicht, Aussparungen, Erhebungen etc.) auf einer zum Rotor hin gewandten Stirnseite aufweisen und/oder eine Materialverteilung (insbesondere innerhalb einer Radialebene) aufweisen, die auf die Verteilung bzw. Konfiguration der Magnetfelderzeugungseinrichtung, wie etwa Anordnung und/oder Orientierung und/oder Verteilung einzelner Permanentmagneten, des Rotors abgestimmt ist bzw. dieser entspricht. Insbesondere kann die Strukturierung und/oder die Materialverteilung des Rotors in Abhängigkeit von dem der Magnetfelderzeugungseinrichtung erzeugten Magnetfluss auf der axialen Stirnseite des Rotors ausgebildet sein. Geometrie und Werkstoffzusammensetzung bzw. Verteilung des Körpers der Flussänderungsvorrichtung kann auf eine Geometrie, Anordnung bzw. Konfiguration und Stärke des Magnetflusses abgestimmt sein, welcher durch die Magnetfelderzeugungseinrichtung des Rotors erzeugt ist. Damit kann eine gezielte und verbesserte Feldschwächung bzw. Flussschwächung erreicht werden und Streuverluste können ferner reduziert werden.

Eine äußere radiale Ausdehnung (zum Beispiel die am weitesten außen liegende - maximale - radiale Position) des Körpers kann im Wesentlichen gleich einer äußeren radialen Ausdehnung des Rotors aber auch kleiner und größer sein. Ferner kann der Körper mit einem radialen Ausdehnungsbereich der Magnetfelderzeugungseinrichtung des Rotors radial überlappen. Der radiale Ausdehnungsbereich der Magnetfelderzeugungseinrichtung kann zum Beispiel als ein radialer Bereich zwischen einer minimalen radialen Position und einer maximalen radialen Position der Magnetfelderzeugungseinrichtung verstanden werden. Durch die radiale Überlappung kann eine Beeinflussung der von der Magnetfelderzeugungseinrichtung erzeugten Magnetflusslinien über einen gesamten (radialen) Bereich der Magnetfelderzeugungseinrichtung bewirkt werden. Damit kann eine Magnetflussschwächung bzw. Beeinflussung gezielt gesteuert werden.

Der Körper kann ferromagnetisches Material aufweisen, was zum Beispiel gleichmäßig verteilt sein kann oder auch über einen Ausdehnungsbereich des Körpers unterschiedlich verdichtet verteilt sein kann. Der Körper kann auch Ausnehmungen, Einbuchtungen und/oder Ausbuchtungen aufweisen. Der Körper kann in bestimmten Ausführungsformen teilweise zumindest als eine ebene Platte bzw. Scheibe gebildet sein, die einfach herstellbar ist. Der Körper kann aus unterschiedlichen Materialien zusammengesetzt sein, oder Teile des Körpers können durch eine entsprechende Behandlung (Lasern, punktueller Wärmeeintrag, ...) in ihren Eigenschaften trotz ggf. einheitlichen Materials unterschiedliche magnetische Eigenschaften besitzen.

In einer anderen Ausführung ist das Stellelement als relativ zum Gehäuse drehfeste aber axial verschiebbare und konzentrische zu einer Rotorachse angeordnete Lagerhülse ausgebildet, welche den Körper drehbar aufnimmt. Diese Lösung ermöglicht eine stabile und sauber zentrierbare Aufnahme des Körpers, bei der sowohl die axiale Verstellbarkeit als auch die freie Drehbarkeit auf einer Lagerhülse gewährleistet werden kann. Um die Reibung zwischen Lagerhülse und dem Körper zu verringern, kann der Körper über beispielsweise ein Wälzlager auf der Lagerhülse angeordnet werden, sodass eine freie Drehbarkeit gewährleistet werden kann. In anderen Ausführungen sind auch entsprechend geeignete Gleitbuchsen oder andere Gleitlager realisierbar.

Der Körper kann mit dem verdrehbaren Rotor oder mit dem Gehäuse (wahlweise aber auch wechselweise) in Umfangsrichtung formschlüssig und/oder reibschlüssig koppelbar sein.

Zur Kopplung können insbesondere jeweils (z.B. komplementäre) Führungsprofile dienen, die ineinander greifen. Zum Beispiel kann der Rotor oder der Körper eine Führungsausnehmung aufweisen und der Körper bzw. der Rotor kann eine Führungshervorstehung aufweisen, wobei Führungsausnehmung und Führungshervorstehung - ggf. als komplementäre Profile - in Eingriff miteinander stehen können, um eine Kopplung der Drehbewegung des Rotors mit der des Körpers zu bewirken.

In anderen Ausführungen können aber anstelle komplementärer Führungsprofile auch eigene, den Körper mit dem Rotor bzw. mit dem Gehäuse verbindende Koppelstücke vorgesehen werden. Dazu können beispielsweise Zentrierstifte vorgesehen werden, die den als Feldschwächeelement dienenden Körper mit Rotorbauteilen verbinden, wobei diese Stifte im Rotorbereich fest verankert sind und der Körper verschiebbar von einem oder mehreren Stiften mitgenommen wird.

Anstelle der Führungsprofile oder der vorstehend beschriebenen Zentrierstifte können auch Reibpaarungen vorgesehen werden, über die die einander zugewandten Stirnflächen es Rotors und des Körpers miteinander koppelbar sind. Der Vorteil von Reibpaarungen besteht darin, dass möglicherweise bestehende Drehzahldifferenzen beim Heranfahren des Körpers an die Rotorstirnfläche durch die auftretende Reibung allmählich herabgesetzt und schließlich ganz abgebaut werden können. Stoß- oder Schlagbeanspruchung wie sie beim Einkoppeln formschlüssiger Elemente entstehen können, werden vermieden.

Die Elektromaschine kann ferner eine weitere Flussänderungsvorrichtung für eine andere (gegenüber liegende) axiale Stirnseite (welche von der Stirnseite des Rotor axial beabstandet ist) des Rotors aufweisen. Damit kann eine weitere Magnetflussschwächung bzw. Magnetflussänderung erreicht werden. So kann die Elektromaschine bei möglicherweise noch höheren Drehzahlen betrieben werden, wie es mit nur einer Flussänderungsvorrichtung möglich wäre.

Ein Vorkommutieren des Statorstroms kann der in den Leitern des Stators induzierten Spannung bei hohen Drehzahlen entgegenwirken. Bei diesem Vorkommutieren kann dem (Stator)Strom in der q-Achse (in einem rotorfesten d-q-Koordinatensystem) zusätzlich ein Strom in Richtung der negativen d-Achse eingestellt werden. Der resultierende Stromzeiger (in Komponenten d und q) wird somit in Bewegungsrichtung geschwenkt und eilt der q-Achse vor. Durch die d-Komponente des Stroms kommt es physikalisch zu einer Schwächung des resultierenden Feldes bzw. des magnetischen Flusses. Das Verfahren kann sowohl bei elektrischen Traktionsmaschinen (Elektro- und Hybridfahrzeuge) als auch bei kleinen Hilfsantrieben (zum Beispiel Lüfter, Pumpen, etc.) im Automobil eingesetzt werden.

Der Stator der Elektromaschine kann Leiter aufweisen (eine Gruppe von Leitern oder mehrere Gruppen von Leitern, wobei jede Gruppe eine Anzahl von Leitern aufweist, die der Anzahl gewünschter elektrischer Phasen entspricht), welche in Statornuten gelegt (bzw. gewickelt) sind, wobei die Elektromaschine ferner eine Statorsteuerung aufweisen kann, welche ausgebildet ist, einen Strom derart durch die Leiter zu steuern, dass eine Schwächung des magnetischen Flusses innerhalb des Spaltes erreicht ist. Damit kann zusätzlich eine Vorkommutierung des Statorstroms vorgenommen werden, um zum Beispiel zusätzlich einen Strom in Richtung einer negativen d-Achse des rotorfesten Koordinatensystems der Maschine einzustellen.

Zur Schwächung des magnetischen Flusses in dem Spalt zwischen Stator und Rotor kann das Verfahren zum Verstellen des Körpers in einer axialen Richtung mit dem Verfahren zum Vorkommutieren des Stromes kombiniert werden, um ferner eine effektive Magnetflussschwächung zu erreichen.

Ausführungsformen der vorliegenden Erfindung werden nun mit Bezug auf die beigelegten Zeichnungen erläutert. Die Erfindung ist nicht auf die illustrierten oder beschriebenen Ausführungsformen begrenzt. Nicht explizit dargestellt ist beispielsweise eine Stator-Rotor-Anordnung, bei der der Spalt zwischen Stator und Rotor nicht radial zur Drehachse sondern axial hierzu ausgeführt ist. Bei diesen Elektromaschinen würde der Körper der Verstelleinrichtung ebenfalls in axialer Richtung verschiebbar installiert sein, allerdings auf eine Innen- oder Außenmantelfläche des Rotors wirken. Diese sind systemisch den Stirnseiten einer Maschine mit radialem Spalt äquivalent. Der Körper würde dann über einen radial aus dem Rotor austretenden Fluss eine Schwächung des rotorseitigen Magnetfeldes ermöglichen.
- Figur 1: illustriert in schematischer Darstellung eine Querschnittsansicht einer Elektromaschine gemäß einer Ausführungsform der vorliegenden Erfindung;
- Figur 2: illustriert in schematischer Darstellung eine Elektromaschine gemäß dem Stand der Technik;
- Figur 3: illustriert in schematischer Axialansicht einen Teil einer Elektromaschine gemäß einer Ausführungsform der vorliegenden Erfindung;
- Figur 4: illustriert in schematischer Darstellung eine Querschnittsansicht einer Elektromaschine gemäß einer weiteren Ausführungsform der vorliegenden Erfindung und
- Figur 5: eine perspektivische Teilschnittdarstellung des Verstellmechanismus aus Figur 4

Ausführungsformen der vorliegenden Erfindung erlauben eine Verringerung des Erregerflusses einer Elektromaschine durch eine Beeinflussung der magnetischen Widerstände (insbesondere der magnetischen Widerstände in Raumbereiche von magnetischem Streufluss). Ein magnetischer Streufluss kann dabei den Anteil des magnetischen Flusses der Elektromaschine beschreiben, welche sich über Teile der Maschine erstreckt, die durch Interaktion nicht direkt kraft- bzw. drehmomentbildend wirken. Hingegen kann ein magnetischer Erregerfluss den magnetischen Flussanteil beschreiben, welcher durch Lorentz-Kräfte direkt einen Teil zum Kraft- bzw. zum Drehmoment der Elektromaschine beiträgt.

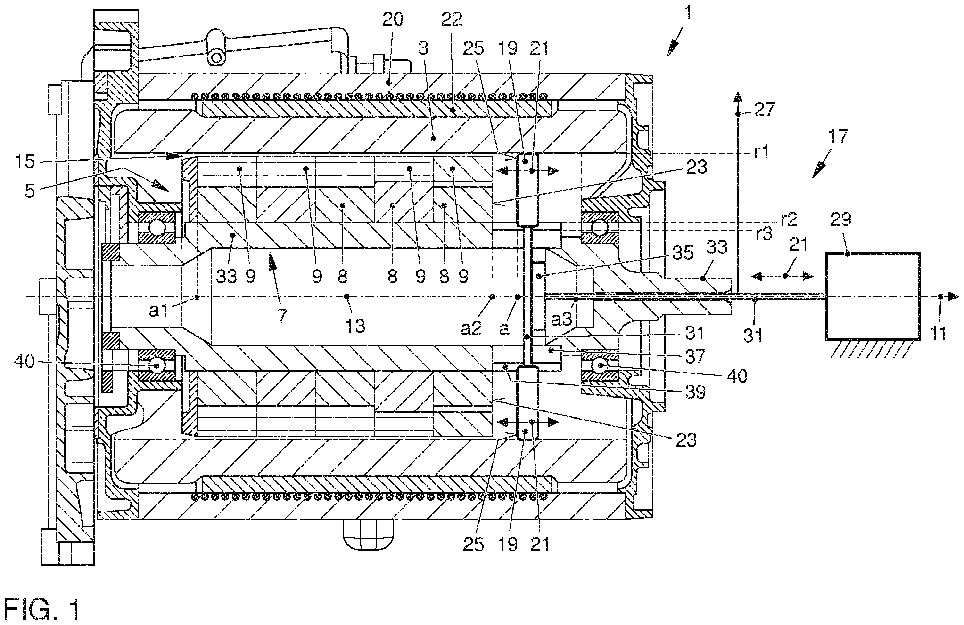

Die in Figur 1 in einer Längsschnittansicht illustrierte Elektromaschine 1 weist einen Stator 3 auf, welcher im Detail nicht illustrierte Leiter umfasst, welche um den Stator 3 gelegt sind, insbesondere in Nuten zwischen Zähnen des Stators 3 gelegt sind. Die Elektromaschine 1, welche insbesondere als eine Synchronmaschine ausgeführt ist, weist ferner einen Rotor 5 auf, welcher eine Magnetfelderzeugungseinrichtung 7 umfasst, welche ein Rotorpaket 8 und eine Mehrzahl von Permanentmagneten 9 aufweist. Das Rotorpaket kann analog dem Statorpaket aus (z.B. ferromagnetischen) Blechen oder einem anderen Material, z.B. ein verpresstes magnetisches Pulvermaterial, ausgeführt sein. Das Rotorpaket ist fest mit der Rotorwelle verbunden. Der Rotor 5 ist um eine in axialer Richtung 11 verlaufende Rotationsachse 13 relativ zu dem Stator drehbar, wobei ein Spalt 15 zwischen dem Stator 3 und dem Rotor 5, insbesondere der Magnetfelderzeugungseinrichtung 7, ausgebildet ist. Der Rotor 5 kann durch dargestellte Lager 40 gelagert sein. Ferner sind ein Gehäuse 20 sowie ein Kühlmantel 22 vorgesehen.

Die Elektromaschine 1 weist ferner eine Flussänderungsvorrichtung 17 auf, welche aus mehreren Komponenten gebildet ist und einen drehfest mit dem Rotor 5 gekoppelten und axial relativ zum Rotor verstellbaren, axial außerhalb der Magnetfelderzeugungseinrichtung 7 angeordneten Körper 19 aufweist, um einen magnetischen Fluss innerhalb des Spaltes 15 in Abhängigkeit von einer Axialstellung des Körpers (angedeutet durch Pfeile 21) relativ zum Rotor 5 zu ändern. Die Axialstellung des Körpers 19 kann z. B. durch eine Axialposition a einer zum Rotor 5 hin gerichteten Oberfläche 25 des Körpers definiert sein. Eine weitere Ausführung der Flussänderungsvorrichtung ist denkbar, in der diese nicht mit dem Rotor sondern mit dem Stator fest verbunden ist und ebenfalls axial zum Rotor verstellbar, axial außerhalb der Magnetfelderzeugungseinrichtung 7 liegt.

Die axiale Ausdehnung der Magnetfelderzeugungseinrichtung 7 reicht von der Axialposition a1 bis zur Axialposition a2. Der Körper 19 ist in einem axialen Bereich a2 bis a3 verschiebbar, wobei der axiale Bereich von a2 bis a3 außerhalb des axialen Bereiches zwischen a1 und a2 liegt, welcher durch die Magnetfelderzeugungseinrichtung 7 eingenommen ist. Somit befindet sich der Körper 19 in allen Verstellpositionen axial außerhalb des Bereiches, in welchem die Magnetfelderzeugungseinrichtung angeordnet ist.

Der Körper 19 ist zu einer axialen Stirnseite bzw. Stirnoberfläche 23 des Rotors 5 hin verschiebbar bzw. bewegbar, insbesondere so weit, dass eine zu der axialen Stirnseite 23 hin gewandte Stirnseite bzw. Stirnoberfläche 25 des Körpers 19 an der axialen Stirnseite 23 des Rotors 5 anliegt. Dabei können sowohl die axiale Stirnseite 23 des Rotors bzw. der Magnetfelderzeugungseinrichtung 7 und die axiale Stirnseite 25 des Körpers 19 jeweils ebene Flächen sein.

In anderen Ausführungsformen kann der Körper 19 an zumindest seiner stirnseitigen Oberfläche 25 strukturiert sein, insbesondere Erhebungen und/oder Absenkungen aufweisen. Diese Strukturierungen können entsprechend einer Verteilung von Magnetflusslinien bzw. Permanentmagneten vorgesehen sein, die von der Magnetfelderzeugungseinrichtung 7 erzeugt sind bzw. in der Magnetfelderzeugungseinrichtung 7 umfasst sind. Ebenso ist auch eine ähnlich geartete Strukturierung der stirnseitigen Oberfläche des Rotors vorstellbar.

Eine radiale Richtung ist durch den Pfeil mit Bezugsziffer 27 angezeigt. Eine äußere radiale Ausdehnung r1 des Körpers 19 gleicht im Wesentlichen einer äußeren radialen Ausdehnung r1 des Rotors 5. Ein radialer Ausdehnungsbereich zwischen r1 und r2 der Magnetfelderzeugungseinrichtung 7 überlappt mit einem radialen Ausdehnungsbereich zwischen r3 und r1 des Körpers 19. Somit kann eine effektive Magnetflussabschwächung erreicht werden, wenn der Körper zu der Stirnseite 23 des Rotors 5 hin verschoben wird.

Die Verschiebung des Körpers 19 zu der Stirnseite 23 des Rotors 5 hin kann insbesondere im Betrieb der Elektromaschine 1 bei Drehzahlen oberhalb eines Schwellwertes durchgeführt werden. Zur Verstellung der Axialposition a der stirnseitigen Oberfläche 25 des Körpers 19 umfasst die Flussänderungsvorrichtung 17 einen Aktuator 29, welcher zum Beispiel als ein hydraulischer Aktuator oder ein elektrischer Aktuator ausgebildet sein kann. Der Aktuator 29 umfasst in der illustrierten Ausführungsform ein Gestänge 31, welches in einem Abschnitt durch eine Hohlwelle 33 des Rotors 5 hindurchgeführt ist. Ein Ende des Gestänges 31 ist mit dem relativ zum Stator 3 ortsfesten Aktuator 29 verbunden und ein anderes Ende ist mit einem Entkopplungselement 35, zum Beispiel ein Gleit- oder Wälzlager gekoppelt, welches eine Drehbewegung des Körpers 19 von dem Aktuator 29 bzw. dem Gestänge 31 entkoppelt.

Eine Nut 37 ist zur Durchführung von Radialelementen des Gestänges 31 in einem inneren Bereich des Stators 3 vorgesehen. Zur Führung des Körpers 19 (mittels des Rotors 5), welcher insbesondere als eine Platte bzw. Scheibe aus ferromagnetischem Material ausgebildet sein kann, können Führungsprofile 39 vorgesehen sein. Insbesondere kann die Platte 19 bzw. das Gestänge 31 radial, aber axial verschieblich mit Elementen des Rotors 5 verzahnt sein. Im Betrieb rotiert der Körper 19 synchron mit dem Rotor 5.

Ausführungsformen der Erfindung führen je nach Axialstellung des Körpers 19 zu einer Umlenkung des von den Permanentmagneten 9 erzeugten magnetischen Flusses in Teile der Elektromaschine, die nicht mehr dem Erregerpfad entsprechen. Somit kann sich das Drehmoment verringern, aber auch die induzierte Spannung, welche in Leitern des Stators 3 induziert ist, kann (bei gleicher Drehzahl) verringert werden. Folglich kann das Drehmoment über ein größeres Drehzahlspektrum erreicht werden. Hierdurch kann, in gewissen Ausführungsformen, auf eine Vorkommutierung des Stromes mit den aus dem Stand der Technik bekannten Nachteilen verzichtet werden.

In anderen Ausführungsformen kann eine Verschiebung des Körpers 19 in axialer Richtung mit einer Vorkommutierung des Stromes der Leiter des Stators 3 kombiniert werden.

Die Umlenkung des Flusses der Permanentmagnete 9 im Rotor 5 kann (z.B. innerhalb des Körpers 19) durch ein Füllen von Luftpfaden des Streuflusses mit Materialien erfolgen, die einen niedrigen magnetischen Widerstand (zum Beispiel Ferromagnetika) haben, insbesondere einen magnetischen Widerstand, welcher kleiner ist als der von Luft.

Die Platte 19 bzw. der Körper 19 und das Gestänge 31 können durch unterschiedliche Konstruktionen und in verschiedenen Geometrien gebildet sein. Gemäß einer Ausführungsform kann ein Verschieben bzw. ein Verstellen des Körpers 19 einer Verstellleistung bedürfen, nicht aber der Betrieb ohne eine Verstelltätigkeit. Damit kann gegenüber dem Verfahren mit Vorkommutierung ein erheblich besserer Wirkungsgrad der Elektromaschine für den gleichen Betriebspunkt möglich sein.

Wie oben bereits erwähnt wurde, kann die Verstellung, insbesondere axiale Verschiebung bzw. Bewegung der Platte 19, mit einer bekannten Vorkommutierung von Statorströmen überlagert bzw. kombiniert werden. Dies kann insbesondere bei Anforderungen einer hohen Dynamik des Antriebs von Vorteil sein oder wenn die Veränderung des Hauptflusses nur selten oder in Stufen erfolgen soll. Damit kann eine Elektromaschine mit doppelter Verstellmöglichkeit der Erregung ("double set of excitation - DSE") bereitgestellt sein.

Ausführungsformen der vorliegenden Erfindung können für jede Art von elektrischem Antrieb angewendet werden, die einen hohen Wirkungsgrad benötigen. Insbesondere kann die Elektromaschine für Antriebe von Elektro- und Hybridfahrzeugen verwendet werden, da die Systemkosten deutlich minimiert werden können. Insbesondere kann eine kleinere Batterie durch den erhöhten Wirkungsgrad der Elektromaschine eine gleiche Reichweite ermöglichen. Ein zusätzlicher Aufwand der Elektromaschine aufgrund der Flussänderungsvorrichtung 17 kann durch Ersparnisse an Betriebskosten, insbesondere Batteriekosten, überkompensiert werden.

Ausführungsformen, wie sie beispielsweise in Figur 1 dargestellt sind, können bzw. brauchen einen Energiebedarf nur bei der Veränderung des Erregerfeldes bzw. Erregerflusses erfordern. Ein Energiebedarf kann zum Beispiel für eine Verstellung des Körpers 19 mittels des Aktuators 29 erforderlich sein. Nach einer erfolgten Einstellung des Erregerflusses durch geeignete Positionierung des Körpers 19 kann jedoch eine Feldschwächung bzw. magnetische Flussschwächung leistungslos erfolgen. Eine Kombination mit einem herkömmlichen Verfahren einer "Vorkommutierung des Stromes" kann ohne Mehraufwand möglich sein. Die Elektromaschine 1 erfordert wenig konstruktiven Aufwand für eine Implementierung. Ferner kann ein hoher Wirkungsgrad des Antriebes bereitgestellt sein.

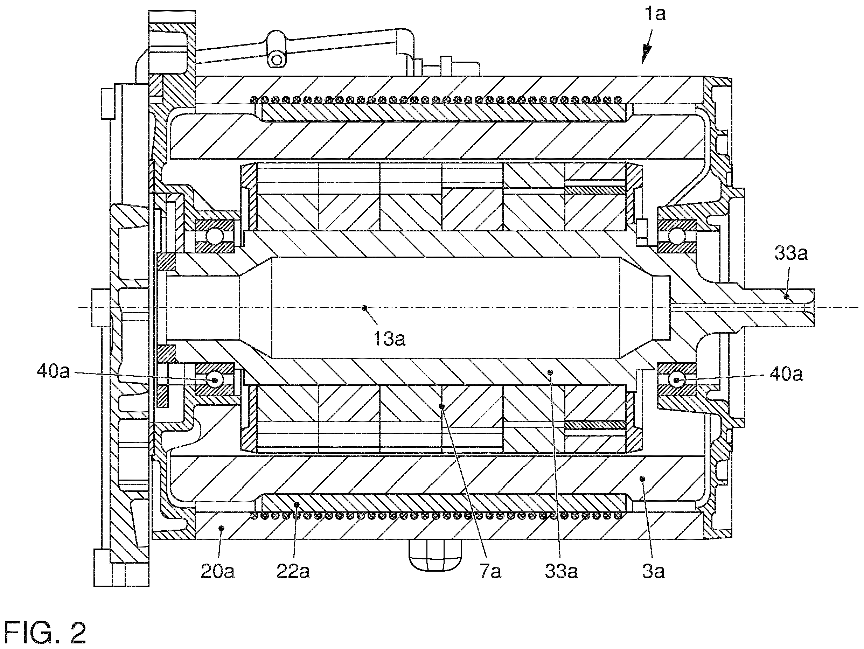

Figur 2 illustriert in schematischer Längsschnittansicht eine Elektromaschine 1a gemäß dem Stand der Technik. Ähnliche oder gleiche Elemente sind in Figuren 1 und 2 mit gleichen Bezugsziffern bezeichnet, wobei den entsprechenden Bezugsziffern in Figur 2 der Buchstabe "a" angefügt wurde. Im Vergleich zu der Elektromaschine 1a gemäß dem Stand der Technik, welche in Figur 2 schematisch illustriert ist, wurde das Rotorpaket mit Magneten 7, 9 des Rotors 1 gemäß einer Ausführungsform der vorliegenden Erfindung, welcher in Figur 1 illustriert ist, verkürzt und in den so gewonnenen Bauraum die verschiebbare Platte 19 integriert. Durch eine axiale Bewegung dieser Platte 19 bzw. dieses Körpers 19 kann der Streufluss des Rotors 5 über den luftgefüllten Raum beeinflusst werden, insbesondere jenseits der stirnseitigen Oberfläche 23 des Rotors 5. Wird die Platte 19 an den Rotor 5, bzw. insbesondere an dessen stirnseitige Oberfläche 23 herangefahren, so wird ein Teil des durch die Permanentmagneten 9 erzeugten Flusses über die Platte geschlossen und nicht mehr für die Erregung der Elektromaschine zur Verfügung stehen. Als ein Ergebnis wird das Erregerfeld geschwächt.

Die Platte 19 kann über Führungsnuten 39 radial mit dem Rotor 5 derart verbunden sein, dass die axiale Bewegung mit der Führung der Platte in Grenzen ermöglicht wird, insbesondere in den Grenzen zwischen a2 und a3 in axialer Richtung, die radiale Bewegung relativ zum Rotor 5 aber vermieden wird. Durch die Drehbewegung der Platte 19 zusammen mit dem Rotor 5 können Wirbelströme weitgehend vermieden werden, da zwischen Platte und Rotorpaket mit Magneten 7, 9 keine Relativgeschwindigkeit besteht. Die Platte 19 bzw. der Körper 19 rotiert somit synchron mit dem Rotor 5.

Eine vereinfachte Ausführung der Erfindung könnte auch eine gehäusefeste Ausführung der Platte vorsehen. Diese Lösung würde jedoch einen schlechteren Wirkungsgrad bedeuten, dem aber durch die Verwendung von geeigneten Materialien (zum Beispiel Soft-Magnetic-Compound) entgegengewirkt werden könnte.

Die axiale Verstellung des Körpers 19 bzw. der Platte 19 erfolgt über den Aktuator 29 erfolgen, welcher zum Beispiel als elektrischer oder hydraulischer Linearantrieb ausgeführt sein kann. Insbesondere kann die Verstellung über das Gestänge 31 erfolgen. Dieses Gestänge 31 sollte über das Entkopplungselement 35 eine Entkopplung der Drehbewegung des Rotors 5 zum feststehenden Aktuator 29 vollziehen.

Die Geometrie des Körpers 19 kann eine besondere Gestaltung bzw. Formgebung aufweisen. Als eine ebene Fläche würde der Streufluss erst kurz vor dem Anlegen der Platte 19 an den Rotor 5 stark ansteigen (nicht-linearer Verlauf des Flusses über eine variable Luftspaltlänge). Auch eine einfache Konturierung braucht nicht in allen Fällen auszureichen, da eine bloße Flächengröße, über den der Fluss in die Platte eindringt, keinen Einfluss bei idealen magnetischen Eigenschaften der Platte (hohe magnetische Permeabilität) haben muss.

Gemäß einer Ausführungsform der vorliegenden Erfindung sind die Ausprägung der Platte bzw. des Körpers 19 und die Ausprägung der Rotorgegenseite (das heißt die Ausprägung der stirnseitigen Oberfläche 25 des Körpers 19 bzw. die Ausprägung der stirnseitigen Oberfläche 23 des Rotors) so ausgelegt, dass Teile des Materials, über den der veränderbare Streufluss fließt, beim Heranfahren der Platte große Teile dieses Flusses führen und somit in Sättigung gehen. Somit ist daher eine Materialverteilung bzw. Werkstoffverteilung innerhalb des Körpers 19 an einen magnetischen Fluss angepasst, welcher durch die Permanentmagneten 9 erzeugt ist. Ein Vorteil einer solchen Gestaltung kann in einer besseren Steuerung des Streuflusses bei Verstellung des Körpers 19, welcher zum Beispiel als Platte ausgeführt sein kann, liegen. Eine Steuerung kann zum Beispiel nahezu proportional zum Verstellweg der Platte 19 und über einen möglichst weiten Bereich erfolgen. Dies kann den erforderlichen Aufwand hinsichtlich der Genauigkeit des mechanischen Verstellmechanismus verringern und größere Toleranzen im Verstellsystem zulassen.

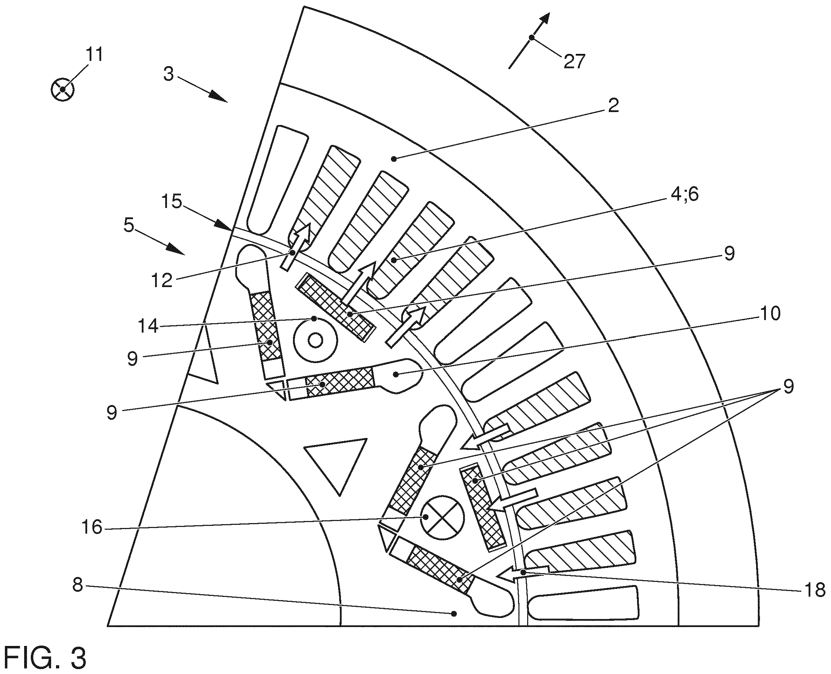

Figur 3 illustriert in einer axialen Ansicht auf eine Querschnittdarstellung einen Teil einer Elektromaschine gemäß einer Ausführungsform der vorliegenden Erfindung. Zum Beispiel kann die in Figur 1 illustrierte Elektromaschine wie teilweise in Figur 3 illustriert ist ausgeführt sein. Der Stator 3 umfasst ein Statorpaket 2 sowie Statornuten 4 zwischen Zähnen des Statorpakets 2. In den Nuten sind Leiter 6 gelegt, in welchen elektrische Spannungen während des Betriebs, d.h. Rotation des Rotors 5 relativ zum Stator, induziert werden. Der Rotor 5 umfasst ein Rotorpaket 8 sowie Kavitäten 10 für Permanentmagneten 9, wobei Teile der Kavitäten 10 von Permanentmagneten 9 gefüllt sind. Der Rotor 5 ist hierbei derart ausgelegt, dass er Magneten 9 einer radial äußeren Lage und Magneten 9 einer radial inneren Lage umfasst. Bezugszeichen 12 bezeichnet eine Erregerfeldrichtung, welche aus dem Rotor 5 (radial) gerichtet ist.

Bezugszeichen 14 bezeichnet eine Streufeldrichtung (aus der Zeichenebene heraus, d.h. axial gerichtet) des oberen Pols eines Magneten und Bezugszeichen 16 bezeichnet eine Streufeldrichtung (in die Zeichenebene hinein, d.h. axial gerichtet) des unteren Pols eines Magneten. Bezugszeichen 18 bezeichnet eine Erregerfeldrichtung, welche in den Rotor (radial) gerichtet ist. Das Streufeld 14 weist somit aus der Ebene heraus und das Streufeld 16 weist in die Zeichenebene hinein. Bei Annähern des Körpers 19 an die in Figur 3 illustrierte Stirnseite des Rotors können diese Streufeldlinien 14, 16 über den Körper 19 geschlossen werden, um somit einen (zumindest teilweisen) magnetischen Kurzschluss zu bewirken.

In dem in Figur 3 schematischen illustrierten Segment als axiale Draufsicht auf Stator- und Rotorpaket sind die Statornuten 4 für die Statorwicklung 6 und die Kavitäten 10 im Rotorpaket für die Integration von Permanentmagneten 9 gezeigt. Das zu beeinflussende Erregerfeld 12, 18weist im Wesentlichen in der radialen Richtung 27 in den Spalt 15. Der dazu notwendige magnetische Fluss wird durch zwei Lagen von Magneten 9 erzeugt, wobei die äußere Lage direkt in der Nähe der Rotormantelfläche und die innere Lage tief im Inneren des Rotors angeordnet ist. Durch das axiale Heranführen des Körpers 19 bzw. der Platte 19 wird der magnetische Fluss, der aus dem oberen Pol vorher über den Spalt 15 geführt wurde, nun zum Teil aus der Zeichenebene herausgeführt (Bezugsziffer 14), über die Platte 19 geführt (in Figur 3 nicht sichtbar), um dann wieder in den unteren Pol 16 einzutreten und den Flusspfad zu schließen.

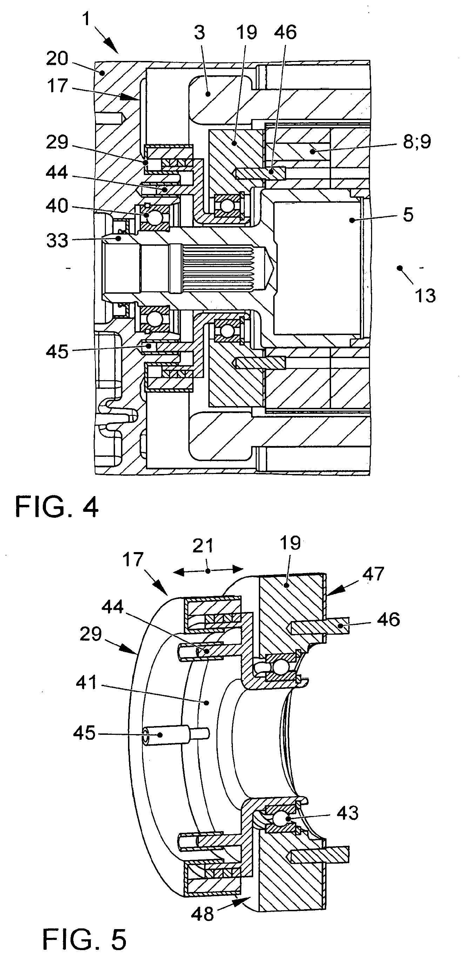

Figur 4 zeigt eine Elektromaschine 1 in einer Längsschnittdarstellung, bei der in einem Gehäuse 20 ein Stator 3 angeordnet ist (drehfest mit dem Gehäuse 20 verbunden). In dem Gehäuse 20 ist weiter eine Rotorwelle 33 über ein Wälzlager 40 eingelagert. Auf der Rotorwelle 33 sind im Innern des Gehäuses im Bereich des Stators 3 Rotorpakete 8 mit Permanentmagneten 9 angeordnet, die gemeinsam mit der Rotorwelle 33 den Rotor 5 bilden, der drehbar um die Rotationsachse 13 ist. Die Flussänderungsvorrichtung 17 (s.a. Fig. 5) umfasst einen ringförmigen Aktuator 29, der mit dem Gehäuse 20 verbunden ist. Der Aktuator ist mit einer als Stellelement dienenden Lagerhülse 41 verbunden und derart gekoppelt, dass diese konzentrisch zur Rotationsachse 13 verläuft und über den Aktuator 29 axial in Richtung 21 verstellbar ist. Die Lagerhülse 41 umfasst einen Lagerstutzen 42, auf dem der Körper 19 über ein Wälzlager 43 frei drehbar gelagert ist.

Zentriert und geführt wird die Lagerhülse 41 über Führungsstifte 44, die von im Gehäuse 20 angeordneten Hülsen 45 aufgenommen werden. In der Darstellung von Figur 4 und Figur 5 sind optionale Zentrierstifte 46 vorgesehen, mit denen der Körper 19 drehfest mit dem Rotor 5 gekoppelt ist. Der Körper ist jedoch auf den fest im Rotor verankerten Zentrierstiften 46 linear verschiebbar aufgenommen, sodass er bei Betätigung des Aktuators in Richtung 21 hin oder her verschoben werden kann.

In einer anderen Ausführung sind keine Zentrierstifte 46 vorgesehen, sodass der Körper 19 frei drehbar, also ohne Kopplung zum ,Rotor, zum Gehäuse oder zum Stator auf der Lagerhülse 41 bzw. dem Wälzlager 43 im Stirnbereich des Rotors angeordnet ist.

In einer anderen Ausführung weisen der Rotor 5 bzw. das Rotorpaket 8 an seiner Stirnfläche und der Körper 19 an seiner zugewandten Stirnfläche 47 Reibflächen auf, die bei entsprechender axialer Verschiebung des Körpers 19 in Richtung Rotor 5 bei Berührung in Eingriff kommen, sodass eine Geschwindigkeitsdifferenz zwischen Körper 19 und Rotor 5 abgebaut wird und sich der Körper mit gleicher Drehgeschwindigkeit wie der Rotor bewegt.

In einer anderen Ausführung kann eine alternative oder ergänzende Reibfläche 48 auch an der gegenüberliegenden Stirnseite des Körpers 19 vorgesehen werden, die dann bei einer axialen Verstellung in Richtung 21 vom Rotor 5 weg mit einer entsprechenden Reibfläche am Gehäuse bzw. an einer Statorbaugruppe in Eingriff kommt und den sich drehenden Körper 19 gegebenenfalls bis zum Stillstand abbremst.

Der Aktor oder Aktuator 29 ist hier als Linearmotor dargestellt. In anderen Ausführungen können solche Linearelemente aber auch mit Stirnrad-, Schnecken- oder Planetengetrieben ausgeführt sein. Die Betätigung des Aktuators 29 soll hier vornehmlich elektrisch erfolgen. Andere Antriebe (z.B. hydraulisch, pneumatisch, piezokaskaden, etc.) sind ebenfalls möglich.

Neben der direkten Übertragung der Linearbewegung des Aktuators 29 auf den Körper 19 kann die entsprechende Linearbewegung auch über eine Drehbewegung des Aktuators (ggf. mit einer Übersetzung) in eine entsprechende Linearbewegung überführt werden, entweder über Stellhebel oder geeignete Spindelantriebe. In der Darstellung ist der Aktuator hier mit dem Gehäuse gekoppelt, in anderen Ausführungen können auch geeignete Aktuatoren mit dem Rotor 5 bzw. der Rotorwelle gekoppelt sein, wobei dann die Linearbewegung in Richtung 21 gegebenenfalls über ein Schraubgewinde erfolgen kann.

Alternativ kann die erforderliche Kopplung des Körpers 19 mit dem Rotor 5 bzw. mit dem Gehäuse 20 auch über die oben beschriebenen formschlüssigen Koppelelemente erfolgen.

Die verdrehbare Lagerung des Körpers 19 auf der Lagerhülse 41 bzw. dem Lagerstutzen 42 über das Wälzlager 43 kann alternativ auch über andere geeignete Lager, insbesondere Gleitlageranordnungen erfolgen.

In anderen Ausführungsformen kann eine andere Konfiguration/Anordnung/Orientierung von Permanentmagneten in dem Rotor 5 vorgesehen sein. Es sind eine Reihe weiterer Ausführungen des Rotors denkbar. Es sollte jedoch ausreichend Material (axial) über und unter den Magneten bereitgestellt sein, um damit eine ausreichend große Flussführung axial zu erreichen.

Für das annähernd lineare Feldschwächverhalten kann eine axiale Verzahnung der Feldschwächungsplatte bzw. des Körpers 19 mit dem Rotorpaket 8 vorgesehen sein. Als wahlweises Ausführungsbeispiel ist auch eine Kombination von ferromagnetischen und nichtferromagnetischen Werkstoffen denkbar (zum Beispiel Stahl und Aluminium). Auf diese Weise kann sich in der Verzahnung gezielt mit Sättigung ein weitgehend lineares Verhalten erzeugen. Der Aufbau kann darin bestehen, im Bereich der axialen Verzahnung die "axialen Nasen aus Stahl" schräg auszufräsen und Aluminiumteile zum Erhalt der mechanischen Festigkeit einzusetzen.

Für Elektromaschinen mit relativ großer axialer Länge kann ein Körper 19, wie er in Figur 1 dargestellt ist, auf beiden Stirnseiten des Rotors vorgesehen sein. Damit kann sichergestellt werden, dass ein sehr großer Teil des magnetischen Flusses über den axialen Weg aus den jeweiligen Stirnseiten des Rotorpaketes austreten kann, und durch die jeweilige Schwächungsplatte hindurchgeführt wird, um das Erregerfeld effektiv weiterhin zu schwächen.
Weiterhin kann der Antrieb bzw. die Steuerung der Elektromaschine hinsichtlich einer Regelung angepasst werden unter Anpassung der Regelparameter für den verfügbaren Permanentmagnetfluss und der Nachführung des Versatzwinkels, speziell bei einseitiger Feldschwächung.
Gemäß einer anderen Ausführungsform ist eine einfachere Ausführung mit stehender Platte bzw. stehenden Platten (ohne Relativgeschwindigkeit zum Stator) möglich. Diese Ausführung würde bei hohen Drehzahlen allerdings Wirbelströme in der Platte zur Folge haben, die beträchtliche Ummagnetisierungsverluste und eine erhebliche Erwärmung der Platte bedeuten würde, sofern nicht ein geeignetes Material mit wenig Verlusten eingesetzt wird.
In einer weiteren Ausführungsvariante ist auf die Nutzung eines Getriebeelements (zum Beispiel Zahnrad, Kupplungslamellen, Lager oder Resolverrotoren) als Platte mit niedrigem magnetischem Widerstand denkbar. Auch andere Elemente, die sich in der Nähe des Rotors befinden, können für diese Funktion genutzt oder qualifiziert werden Die Nutzung dieses Elements anstatt einer separaten Platte kann eine Funktionsintegration für die Ausnutzung des Bauraums, die Vermeidung von Kosten und weniger Gewicht sein.

### Bezugszeichenliste

- 1,1a: Elektromaschine
- 2: Statorpaket
- 3,3a: Stator
- 4: Statornut
- 5: Rotor
- 6: Wicklung
- 7,7a: Magnetfelderzeugungseinrichtung
- 8: Rotorpaket
- 9: Permanentmagnete
- 10: Rotorkavität
- 11: axiale Richtung
- 12,18: Erregerfeldrichtung
- 13,13a: Rotationsachse
- 14,16: Streufeldrichtung
- 15: Spalt
- 17: Flussänderungsvorrichtung
- 19: Körper
- 20,20a: Gehäuse
- 21: Verstellrichtung
- 22,22a: Kühlmantel
- 23: stirnseitige Oberfläche des Rotors
- 25: stirnseitige Oberfläche des Körpers
- 27: radiale Richtung
- 29: Aktuator
- 31: Gestänge
- 33,33a: Rotorwelle
- 35: Entkopplungsvorrichtung
- 37: Nut
- 39: Führung für Körper
- 40,40a: Lager
- a1, a2: axiale Grenzen des Rotorpakets
- a2, a3: axiale Grenzen der Verstellmöglichkeit des Körpers
- a: aktuelle Position des Körpers in Axialrichtung
- r1: äußere radiale Ausdehnung des Körpers bzw. des Rotors
- r1, r2: radialer Ausdehnungsbereich des Rotors
- r1, r3: radialer Ausdehnungsbereich des Körpers
- 41: Lagerhülse
- 42: Lagerstutzen
- 43: Wälzlager
- 44: Führungsstifte
- 45: Hülse
- 46: Zentrierstifte
- 47: Reibflächen
- 48: Reibflächen

## Patentansprüche

1. Elektromaschine (1), aufweisend:
einen zu einem Gehäuse (20) fixierten Stator (3);
einen Rotor (5) mit einer Magnetfelderzeugungseinrichtung (7) zum Erzeugen eines magnetischen Flusses, wobei der Rotor (5) koaxial drehbar relativ zu dem Stator (3) angeordnet ist und ein Spalt (15) zwischen Stator und Rotor ausgebildet ist; und
eine Flussänderungsvorrichtung (17), welche
einen axial relativ zum Rotor (5) verstellbaren, axial außerhalb der Magnetfelderzeugungseinrichtung (7) angeordneten Körper (19) aufweist, um einen magnetischen Fluss innerhalb des Spaltes (15) in Abhängigkeit von einer Axialstellung (a) des Körpers (19) relativ zum Rotor (5) zu ändern, wobei die Flussänderungsvorrichtung (17) eine Verstelleinrichtung (29, 31) zum axialen Verstellen der Axialposition des Körpers relativ zum Rotor umfasst, wobei die Verstelleinrichtung aufweist:
einen Aktuator (29), der über ein Stellelement auf den Körper (19) wirkt, **dadurch gekennzeichnet, dass** das Stellelement derart am Körper (19) und/oder am Aktuator angreift, dass eine Drehbewegung des Körpers (19) vom Stellelement (31), vom Gehäuse (20), vom Rotor (5) und/oder vom Aktuator (29) entkoppelbar ist.

2. Elektromaschine gemäß Anspruch 1, wobei der Körper (19) zu einer axialen Stirnseite (23) des Rotors (5) hin verstellbar ist, um einen magnetischen Kurzschluss zumindest eines Teils von Streumagnetflusskomponenten (14, 16) des Rotors (5) an der axialen Stirnseite (23) des Rotors zu bewirken.

3. Elektromaschine gemäß Anspruch 2, wobei der Körper (19) einen Werkstoff mit einem niedrigeren magnetischen Widerstand als Luft aufweist, wobei bei Verstellen des Körpers (19) zu der axialen Stirnseite (23) des Rotors (5) hin der Werkstoff des Körpers zumindest in einem Teilbereich des Körpers in Sättigung magnetisiert wird.

4. Elektromaschine gemäß einem der vorangehenden Ansprüche 2 oder 3, wobei der Körper eine Strukturierung auf einer zum Rotor (5) hingewandten Stirnseite (25) und/oder eine Materialverteilung aufweist, wobei die Strukturierung und/oder die Materialverteilung in Abhängigkeit von von der Magnetfelderzeugungseinrichtung (7) erzeugtem Magnetfluss (14, 16) auf der axialen Stirnseite (23) des Rotors (5) ausgebildet ist,
wobei der Körper insbesondere aus unterschiedlichen Materialien zusammengesetzt ist, oder Teile des Körpers durch eine entsprechende Behandlung in ihren Eigenschaften trotz ggf. einheitlichen Materials unterschiedliche magnetische Eigenschaften besitzen.

5. Elektromaschine gemäß einem der vorangehenden Ansprüche, wobei eine äußere radiale Ausdehnung (r1) des Körpers (19) im Wesentlichen gleich einer äußeren radialen Ausdehnung (r1) des Rotorpakets (5) ist, wobei der Körper mit einem radialen Ausdehnungsbereich (r1, r2) der Magnetfelderzeugungseinrichtung (7) des Rotorpakets (5) radial überlappt.

6. Elektromaschine gemäß einem der vorangehenden Ansprüche, wobei das Stellelement als relativ zum Gehäuse (20) drehfest, axial verschiebbare und konzentrisch zu einer Rotorachse (13) angeordnete Lagerhülse (41) ausgebildet ist, welche den Körper (19) drehbar aufnimmt.

7. Elektromaschine gemäß einem der vorangehenden Ansprüche, wobei der Körper (19) mit dem Rotor (5) und/oder mit dem Gehäuse (20) in Umfangsrichtung formschlüssig und/oder reibschlüssig koppelbar ist.

8. Elektromaschine nach Anspruch 7, wobei die Kopplung des Körpers (19) mit dem Rotor (5) und/oder dem Gehäuse (20) über wenigstens eines der folgenden Koppelelemente erfolgt: komplementäre Führungsprofile, den Körper (19) mit dem Rotor (5) und/oder dem Gehäuse (20) verbindende Koppelstücke (46), komplementäre Reib-/Haftflächen (47, 49)

9. Elektromaschine gemäß einem der vorangehenden Ansprüche, ferner aufweisend:
eine weitere Flussänderungsvorrichtung (17) für eine andere axiale Stirnseite des Rotors (5).

10. Elektromaschine gemäß einem der vorangehenden Ansprüche, wobei der Stator (3) Leiter (6) aufweist, welche um den Stator gelegt sind, wobei die Elektromaschine ferner eine Statorsteuerung aufweist, welche ausgebildet ist, einen Strom durch die Leiter (6) derart zu steuern, dass eine Schwächung des magnetischen Flusses innerhalb des Spaltes (15) erreicht ist.

## Claims

1. Electric machine (1) comprising:
a stator (3) that is fixed to a housing (20);
a rotor (5) having a magnetic field generating device (7) for generating a magnetic flux, wherein the rotor (5) is arranged in such a manner as to be able to rotate in a coaxial manner relative to the stator (3) and a gap (15) is provided between the stator and the rotor; and
a flux changing apparatus (17) that
comprises a body (19) that can be adjusted in an axial manner relative to the rotor (5) and is arranged axially outside the magnetic field generating device (7) so as to change a magnetic flux within the gap (15) in dependence upon an axial position (a) of the body (19) relative to the rotor (5), wherein the flux changing apparatus (17) comprises an adjusting device (29, 31) for axially adjusting the axial position of the body relative to the rotor, wherein the adjusting device comprises:
an actuator (29) that acts on the body (19) via an adjusting element, **characterized in that** the adjusting element engages with the body (19) and/or the actuator in such a manner that a rotational movement of the body (19) can be decoupled from the adjusting element (31), from the housing (20), from the rotor (5) and/or from the actuator (29).

2. Electric machine according to Claim 1, wherein the body (19) can be displaced toward an axial end face (23) of the rotor (5) so as to produce a magnetic short circuit at least of some of the leakage magnetic flux components (14, 16) of the rotor (5) at the axial end face (23) of the rotor.

3. Electric machine according to Claim 2, wherein the body (19) comprises a material that has a lower magnetic resistance than air, wherein when the body (19) is being displaced toward the axial end face (23) of the rotor (5), the material of the body can be magnetized to saturation at least in a part region of the body.

4. Electric machine according to any one of the preceding Claims 2 or 3, wherein the body comprises a structuring on an end face (25) that is facing the rotor (5) and/or a material distribution, wherein the structuring and/or the material distribution is configured on the axial end face (23) of the rotor (5) in dependence upon the magnetic flux (14, 16) that is generated by the magnetic field generating device (7),
wherein the body is embodied in particular from different materials, or parts of the body have different magnetic characteristics as a result of a corresponding treatment in their characteristics despite where necessary uniform materials.

5. Electric machine according to any one of the preceding claims, wherein an outer radial extension (r1) of the body (19) is essentially equal to an outer radial extension (r1) of the rotor stack (5), wherein the body overlaps the magnetic field generating device (7) of the rotor stack (5) in a radial manner with a radial extension region (r1, r2).

6. Electric machine according to any one of the preceding claims, wherein the adjusting element is configured as a bearing sleeve (41) that is arranged in a non-rotational manner relative to the housing (20) and in an axially displaceable and concentric manner relative to an axis of rotation (13), and said bearing sleeve receives the body (19) in a rotatable manner.

7. Electric machine according to any one of the preceding claims, wherein the body (19) can be coupled to the rotor (5) and/or to the housing (20) in the peripheral direction in a positive-locking manner and/or a friction-locking manner.

8. Electric machine according to Claim 7, wherein the body (19) is coupled to the rotor (5) and/or to the housing (20) via at least one of the following coupling elements: complementary guiding profiles, coupling pieces (46) that connect the body (19) to the rotor (5) and/or to the housing (20), complementary friction/adhering surfaces (47, 49).

9. Electric machine according to any one of the preceding claims, moreover comprising:
a further flux changing apparatus (17) for a different axial end face of the rotor (5).

10. Electric machine according to any one of the preceding claims, wherein the stator (3) comprises conductors (6) that are placed around the stator, wherein the electric machine moreover comprises a stator controller that is configured so as to control a current through the conductors (6) in such a manner that the magnetic flux within the gap (15) is weakened.

## Revendications

1. Machine électrique (1), comprenant :
un stator (3) fixé à une carcasse (20) ;
un rotor (5) pourvu d'un système de génération de champ magnétique (7) pour générer un flux magnétique, le rotor (5) étant disposé de manière à pouvoir tourner coaxialement par rapport au stator (3) et un entrefer (15) étant formé entre le stator et le rotor ; et
un dispositif de modification de flux (17) qui comporte un corps (19) disposé de manière déplaçable axialement par rapport au rotor (5) et axialement en dehors du système de génération de champ magnétique (7), pour modifier un flux magnétique à l'intérieur de l'entrefer (15) en fonction d'une position axiale (a) du corps (19) par rapport au rotor (5), le dispositif de modification de flux (17) comprenant un système de déplacement (29, 31) pour le déplacement axial de la position axiale du corps par rapport au rotor, le système de déplacement comportant :
un actionneur (29), qui agit sur le corps (19) par l'intermédiaire d'un élément de réglage,
**caractérisé en ce que** l'élément de réglage intervient sur le corps (19) et/ou sur l'actionneur de manière à ce qu'un mouvement de rotation du corps (19) puisse être découplé de l'élément de réglage (31), de la carcasse (20), du rotor (5) et/ou de l'actionneur (29).

2. Machine électrique selon la revendication 1, dans laquelle le corps (19) est déplaçable vers une face frontale axiale (23) du rotor (5) pour produire un court-circuit magnétique d'au moins une partie de composantes de flux magnétique de fuite (14, 16) du rotor (5) au niveau de la face frontale axiale (23) du rotor.

3. Machine électrique selon la revendication 2, dans laquelle le corps (19) comprend un matériau présentant une résistance magnétique inférieure à celle de l'air, le matériau du corps étant magnétisé à saturation dans au moins une zone partielle du corps lors du déplacement du corps (19) vers la face frontale axiale (23) du rotor (5).

4. Machine électrique selon l'une des revendications 2 ou 3 précédentes, dans laquelle le corps présente une structuration sur une face frontale (25) tournée vers le rotor (5) et/ou une répartition du matériau, la structuration et/ou la répartition du matériau étant réalisée sur la face frontale axiale (23) du rotor (5) en fonction du flux magnétique (14, 16) généré par le système de génération de champ magnétique (7), le corps étant en particulier composé de matériaux différents, ou des parties du corps possédant des propriétés magnétiques différentes du fait d'un traitement correspondant affectant leurs propriétés malgré un matériau pouvant être uniforme.

5. Machine électrique selon l'une des revendications précédentes, dans laquelle une extension radiale extérieure (r1) du corps (19) est sensiblement égale à une extension radiale extérieure (r1) de l'ensemble rotor (5), le corps chevauchant radialement une zone d'extension radiale (r1, r2) du système de génération de champ magnétique (7) de l'ensemble rotor (5) .

6. Machine électrique selon l'une des revendications précédentes, dans laquelle l'élément de réglage est réalisé sous la forme d'un manchon de palier (41) fixé en rotation par rapport à la carcasse (20), déplaçable axialement et disposé concentriquement à un axe de rotor (13) et qui reçoit le corps (19) en rotation.

7. Machine électrique selon l'une des revendications précédentes, dans laquelle le corps (19) peut être accouplé au rotor (5) et/ou à la carcasse (20) dans la direction circonférentielle par complémentarité de forme et/ou par liaison par frottement.

8. Machine électrique selon la revendication 7, **caractérisée en ce que** l'accouplement du corps (19) avec le rotor (5) et/ou la carcasse (20) est effectué par l'intermédiaire d'au moins l'un des éléments d'accouplement suivants : des profils de guidage complémentaires, des pièces d'accouplement (46) reliant le corps (19) au rotor (5) et/ou à la carcasse (20), des surfaces de frottement/d'adhérence (47, 49) complémentaires.

9. Machine électrique selon l'une des revendications précédentes, comportant en outre :
un autre dispositif de modification de flux (17) pour une autre face frontale axiale du rotor (5).

10. Machine électrique selon l'une des revendications précédentes, dans laquelle le stator (3) comporte des conducteurs (6) qui sont disposés autour du stator, la machine électrique comportant en outre une commande de stator qui est conçue pour commander un courant passant dans les conducteurs (6) de manière à provoquer une atténuation du flux magnétique dans l'entrefer (15) .
